**Europäisches Patentamt**

**European Patent Office**

**Office européen des brevets**

(19)

(11) **EP 1 578 063 A2**

(12) **EUROPEAN PATENT APPLICATION**

(43) Date of publication:
**21.09.2005 Bulletin 2005/38**

(51) Int Cl.⁷: **H04L 12/28**

(21) Application number: **05251551.7**

(22) Date of filing: **15.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **15.03.2004 JP 2004073510**

(71) Applicant: **KABUSHIKI KAISHA TOSHIBA**
**Tokyo 105-8001 (JP)**

(72) Inventors:
  • **Tanabe, Yasuhiko, c/o Intellectual Property Div.**
    **Minato-ku, Tokyo 105-8001 (JP)**
  • **Kobayashi, Takahiro,**
    **c/o Intellectual Property Div**
    **Minato-ku, Tokyo 105-8001 (JP)**

  • **Toshimitsu, Kiyoshi,**
    **c/o Intellectual Property Div**
    **Minato-ku, Tokyo 105-8001 (JP)**
  • **Deguchi, Noritaka, c/o Intellectual Property Div.**
    **Minato-ku, Tokyo 105-8001 (JP)**
  • **Takeda, Daisuke, c/o Intellectual Property Div.**
    **Minato-ku, Tokyo 105-8001 (JP)**
  • **Kawabata, Kazuaki, c/o Intellectual Property Div.**
    **Minato-ku, Tokyo 105-8001 (JP)**

(74) Representative: **Granleese, Rhian Jane**
    **Marks & Clerk**
    **90 Long Acre**
    **London WC2E 9RA (GB)**

(54) **Radio transmitting apparatus provided with transmitters and transmitting antennas**

(57)     A radio transmitting apparatus with a plurality of transmission units (19A to 19C, 20A to 20C) comprises a calculation unit (15) configured to calculate, based on a data length of a transmission signal including a control signal and a data signal following the control signal, a transmission time required for transmitting the transmission signal and one or more transmission times corresponding to the number of one or more divisions of the transmission signal, and a signal generation unit (14, 17A to 17C, 18) configured to generate a signal supplied to at least one of the transmission units(19A to 19C, 20A to 20C), using the transmission signal corresponding to a minimum transmission time of the one or more transmission times or the divisions of the transmission signal which correspond to the minimum transmission time.

FIG.4

**EP 1 578 063 A2**

**Description**

The present invention relates to a radio transmitting apparatus, and more particularly to a radio transmitting apparatus provided with a plurality of transmitters and transmitting antennas.

In the field of radio communication systems, a scheme for simultaneously transmitting a plurality of signals at a same carrier frequency output from a plurality of transmitters incorporated in a transmitting terminal has been proposed as a technique for increasing the rate of transmission (see, for example, USP Nos. 6,097,771 and 6,058,105). In this scheme, transmission signals from the transmitters of a transmitting terminal are combined in space by multiplexing, and the resultant signal is received by a receiving terminal.

A scheme is known in which original transmission signals are separated from a signal combined by multiplexing, using a receiving terminal provided with a plurality of receivers. On the other hand, when a single receiver receives a signal combined by multiplexing, it estimates, from the received signal, the transmitted signals that exhibits the maximum joint probability density function, thereby simultaneously receiving a plurality of transmission signals. This enables the transmission rate to be increased in accordance with the number of transmitters without extending the frequency band used for communication. As a result, the frequency use efficiency and hence the throughput are enhanced.

In both of the above-described receiving schemes, it is necessary to estimate all channel response values between the transmitters of a transmitting terminal and a receiving terminal. Estimation of channel response values is performed by transmitting known signals from the transmitting terminal, and comparing the known signals received by the receiving terminal with reference known signals prestored in a memory of the receiving terminal.

In the above-described conventional radio communication system, the number of channels between the transmitting terminal and receiving terminal, whose response values are to be estimated, is increased in proportion to the number of signals combined by multiplexing. Accordingly, in general, a known signal for channel response estimation, whose length is proportional to the number of signals combined by multiplexing is transmitted. If the number of data signals is relatively small, i.e., if the time required to transmit the known signals for channel response estimation is relatively long compared to the time required to transmit the data signals, overhead for transmitting the known signals is relatively large. This being so, when signals are transmitted utilizing spatial multiplexing of the signals, if the time required to transmit the known signals for channel response estimation is included, the total time required to transmit the signals may well become longer than in the case of transmitting the signals using a single transmitter (i.e., without utilizing spatial multiplexing). As a result, the throughput is reduced.

It is an object of the invention to provide a radio transmitting apparatus free from a reduction in throughput due to a control signal such as a known signal for channel response estimation.

According to an aspect of the invention, there is provided a radio transmitting apparatus with a plurality of transmission units comprises a calculation unit configured to calculate, based on a length of a transmission signal including a control signal and a data signal following the control signal, a transmission time required for transmitting the transmission signal and one or more transmission times corresponding to the number of one or more divisions of the transmission signal; and a signal generation unit configured to generate a signal supplied to at least one of the transmission units, using the transmission signal corresponding to a minimum transmission time of the one or more transmission times or the divisions of the transmission signal which correspond to the minimum transmission time.

According to a second aspect of the present invention, there is provided a radio transmitting apparatus with a plurality of transmission units, comprises a discrimination unit configured to discriminate a data type of a transmission signal including a control signal and a data signal following the control signal; a signal generation unit configured to generate a signal supplied to at least one of the transmission units, using the transmission signal corresponding to the data type or one or more divisions of the transmission signal which correspond to the data type.

According to a third aspect of the present invention, there is provided a radio transmitting apparatus with a plurality of transmission units, comprises a discrimination unit configured to discriminate a data type of a transmission signal including a control signal and a data signal following the control signal; a calculation unit configured to calculate, based on a length of a transmission signal including a control signal and the data signal following the control signal, a transmission time required for transmitting the signal, one or more transmission times corresponding to the number of one or more divisions of the transmission signal; and a signal generation unit configured to generate a to-be-transmitted signal supplied to at least one of the transmission units, using the transmission signal corresponding to a minimum length of the control signal or the divisions of the transmission signal which correspond to the minimum length of the control signal when the data type is a particular one, the signal generation unit being configured to generate a signal, using the transmission signal corresponding to a minimum transmission time of the one or more transmission times or the divisions of the transmission signal which correspond to the minimum transmission time when the data type is not the particular one.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram illustrating a radio communication system using a plurality of transmitters and receivers;

FIG. 2 is a view illustrating the frame format of a physical layer that conforms to IEEE 802.11a;

FIG. 3 is a view illustrating a frame format example of the physical layer used when a plurality of signals are transmitted by spatial multiplexing;

FIG. 4 is a block diagram illustrating a radio transmitting apparatus according to a first embodiment of the invention;

FIG. 5 is a block diagram illustrating a first example of the spatial multiplexing signal generator appearing in FIG. 4;

FIG. 6 is a view useful in explaining the relationship between the header signal length and data signal length of a transmission signal when division number 1 is selected;

FIG. 7 is a view useful in explaining the relationship between the header signal length and data signal length of a transmission signal when division number 3 is selected;

FIG. 8 a view useful in explaining the relationship between the header signal length and data signal length of a transmission signal when division numbers 1 and 3 provide the same transmission time;

FIG. 9 is a view illustrating a second example of the spatial multiplexing signal generator appearing in FIG. 4;

FIG. 10 is a view illustrating a third example of the spatial multiplexing signal generator appearing in FIG. 4;

FIG. 11 is a view illustrating a fourth example of the spatial multiplexing signal generator appearing in FIG. 4;

FIG. 12 is a view useful in explaining a transmission time calculation range employed when RTS/CTS (Request-To-Send/Clear-To-Send) is used;

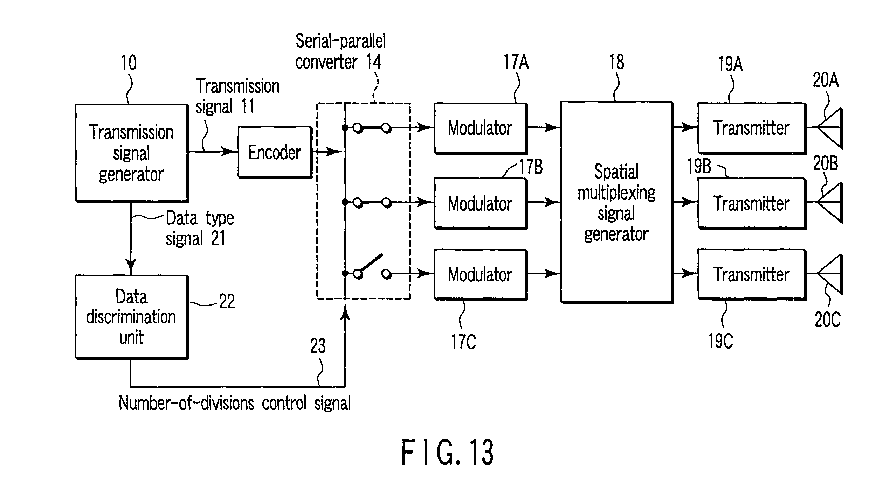

FIG. 13 is a block diagram illustrating a radio transmitting apparatus according to a second embodiment of the invention;

FIG. 14 is a block diagram illustrating a radio transmitting apparatus according to a third embodiment of the invention; and

FIG. 15 is a flowchart useful in explaining the procedure of processing employed in the third embodiment.

Embodiments of the invention will be described in detail with reference to the accompanying drawings.

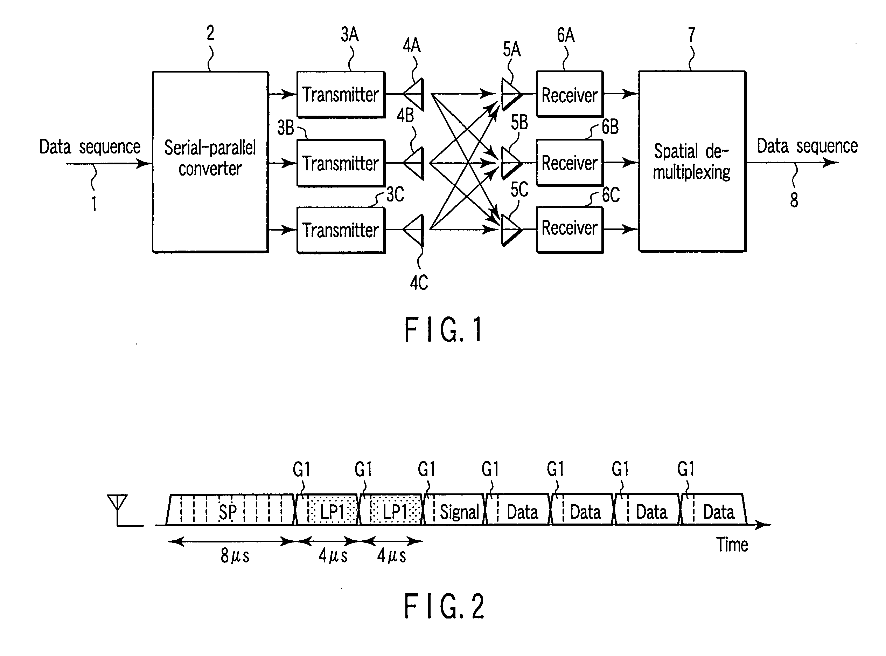

Referring first to FIG. 1, a description will be given of a radio communication system based on the multi-input multi-output (MIMO) technique. In the radio communication system shown in FIG. 1, a transmitting terminal (radio transmitting device) has a plurality of transmitters 3A to 3C and transmission antennas 4A to 4C, and a receiving terminal (radio receiving device) has a plurality of receiving antennas 5A to 5C and receivers 6A to 6C.

In the transmitting terminal, a data sequence 1 to be transmitted is divided into a plurality of signals by serial-to-parallel conversion performed by a parallel-to-signal converter 2. The resultant signals are input to the transmitters 3A to 3C. The transmitters 3A to 3C may be general ones that each comprise, for example, a frequency converter, digital modulator, D/A converter, filter, power amplifier, etc., and therefore will not be described in detail.

The transmitters 3A to 3C output digital modulation signals of a radio frequency (RF) band, and the transmission antennas 4A to 4C transmit the signals in parallel. Accordingly, the time required to transmit a transmission signal is reduced to 1/N (N is the number of the transmitters, i.e., 3 in this embodiment) of the time required for a single transmitter to transmit it. Since the transmitters 3A to 3C transmit the signals using the same carrier frequency, the occupied frequency bandwidth is prevented from increasing.

The signals transmitted from the transmitters 3A to 3C via the transmission antennas 4A to 4C reach the receiving terminal via the respective channels indicated by the arrows. In the receiving terminal, the signals are received by the respective receiving antennas 5A to 5C. More specifically, the signals transmitted from the transmission antennas 4A to 4C are combined in space by multiplexing, and the resultant signal reaches the receiving terminal, where it is received by the receiving antennas 5A to 5C.

The received signals output from the receiving antennas 5A to 5C are input to the receivers 6A to 6C, respectively. The receivers 6A to 6C may be general ones that comprise a low-noise amplifier, frequency converter, A/D converter, filter and digital demodulator, etc. Therefore, no detailed description will be given of the receivers. The signals output from the receivers 6A to 6C are input into spatial de-multiplexing 7, and output as a single data sequence 8 on a bus.

Assuming here that signals transmitted from the transmission antennas 4A to 4C are represented by s1, s2 and s3, respectively, and signals received by the receiving antennas 5A to 5C are represented by r1, r2 and r3, respectively, these signals can be modeled using the following expression:

$$\begin{bmatrix} r_1 \\ r_2 \\ r_3 \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} s_1 \\ s_2 \\ s_3 \end{bmatrix} + \begin{bmatrix} n_1 \\ n_2 \\ n_3 \end{bmatrix} \qquad (1)$$

where hij represents a channel response value between the jth transmission antenna and the ith receiving antenna, and ni represents the noise component of the output signal of the ith receiving antenna. Signals s1, s2 and s3 transmitted by the transmission antennas 4A to 4C are received by the receiving antennas 5A to 5C after they are subjected to different fading fluctuations. The receiving terminal estimates all channel response values between the transmission antennas 4A to 4C and the receiving antennas 5A to 5C, thereby estimating transmission signals s1, s2 and s3 from received signals r1, r2 and r3, respectively.

In the radio communication system as shown in FIG. 1, it is necessary, as described above, for the receiving terminal to estimate all channel response values between the transmission antennas 4A to 4C and the receiving antennas 5A to 5C. In general, to estimate channel response values, the transmitting terminal transmits known signals from the transmitters 3A to 3C. Accordingly, if the number of divisions in the parallel-serial converter 2 is increased (i. e., if the number of signals combined by spatial multiplexing between the transmission antennas 4A to 4C and the receiving antennas 5A to 5C is increased), the number of known signals necessary to estimate all channel response values is also increased. A description will now be given of a case where a frame format according to IEEE 802.11a as a wireless LAN standard is applied to the radio communication system utilizing spatial multiplexing as shown in FIG. 1.

FIG. 2 shows a frame format employed for a physical layer according to IEEE 802.11a. As shown in FIG. 2, in this format, a short preamble sequence SP for timing synchronization, frequency synchronization and auto gain control (AGC) between the transmission and receiving sides, long preamble sequences LP1 as known signals for channel response estimation, and a signal field Signal for reporting a transmission data length and modulation scheme are sequentially transmitted as a header signal. After the signal field Signal, data signals Data are transmitted. A guard interval GI is provided between the short preamble sequence SP and the first long preamble sequence LP1, between the adjacent long preamble sequences LP1, between the last long preamble sequence LP1 and signal field Signal, between the signal field Signal and the first data signal Data, and between the adjacent data signals Data. The guard signal GI is provided for preventing occurrence of distortion due to a delay signal.

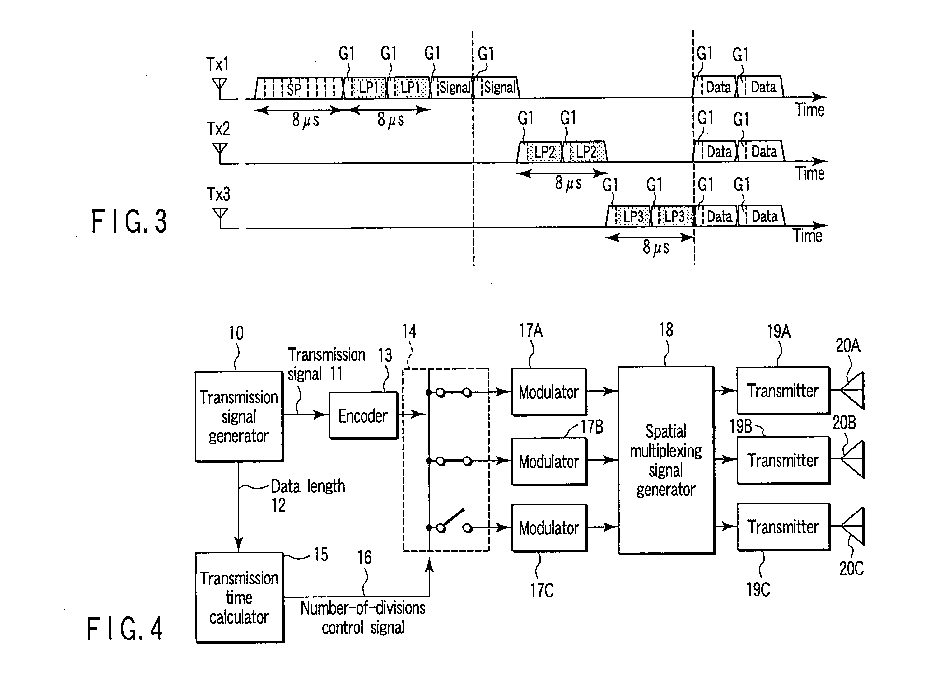

On the other hand, FIG. 3 shows a frame format example used in the radio communication system shown in FIG. 1 that performs transmission utilizing spatial multiplexing. In this example, another signal field Signal necessary to transmit a signal by spatial multiplexing, and long preamble sequences LP2 and LP3 as known signals for channel response estimation are added between the signal field Signal and data signals Dada shown in FIG. 2. In FIG. 3, the first long preamble sequences LP1 are used for, for example, estimating the channel response value between the transmission antenna 4A and receiving terminal, and the added long preamble sequences LP2 and LP3 are used to estimate the channel response value between the transmission antenna 4B and receiving terminal and between the transmission antenna 4C and receiving terminal, respectively. Assume here that the total time of the added second signal field Signal and long preamble sequences LP2 and LP3 is Tadd(3).

As described above, in the radio communication system utilizing spatial multiplexing, shown in FIG. 1, the transmission rate of a data signal can be enhanced by increasing the number of divisions into which a transmission signal is divided, i.e., the division number. In contrast, in the system, it is necessary to increase the number of known signals, for estimating channel response values, in accordance with the number of divisions, which inevitably increases overhead for channel response estimation. Accordingly, if the transmission time of each known signal for channel response estimation is not sufficiently small relative to the transmission time of a data signal, overhead cannot be ignored.

In a packet communication system such as a wireless LAN, the amount of data transmitted by one frame is not constant, unlike a circuit communication system such as a mobile phone system. Therefore, the ratio of the transmission time of each known signal for channel response estimation to the transmission time of a data signal varies between packets. On the other hand, in an IEEE 802.11a radio communication system for transmitting a modulation and coding scheme (MCS) included in a set of MCSs as combinations of modulation schemes and coding rates, the transmission time of a data signal varies between the MCSs. Moreover, a receiving terminal cannot always receive all signals transmitted from a transmission terminal using a MCS, which means that usable schemes are limited depending upon the configuration of a receiving terminal and/or the propagation environment. Embodiments of the invention to solve these problems will be described in detail.

(First Embodiment)

In a first embodiment of the invention, the time (hereinafter referred to simply as the "transmission time") required to transmit a transmission signal including a header signal and data signal is calculated while varying the number of divisions into which the transmission signal is divided. The transmission signal divided into the divisions that minimize the transmission time is transmitted. Assume here that the number of divisions includes 1 (meaning no division).

If the number of antennas of a transmitting terminal is 3, and that of antennas of a receiving terminal is 3, the maximum number of divisions of a transmission signal is 3. However, if the number of antennas of the receiving terminal is smaller than that of the transmitting terminal, or even if they have the same number of antennas, when the propagation environment is not good, the number of divisions becomes smaller than 3. In the embodiment, assume that the maximum number of divisions is 3, and this is known to the receiving and transmitting terminals.

In a radio transmitting apparatus employed in the first embodiment, a transmission signal generator 10 outputs a transmission signal 11 and data length signal 12. The transmission signal 11 is encoded by an encoder 13 and then input to a serial-parallel converter 14.

The data length signal 12 indicates a data signal length, i.e., the length (the number of data bits) of a data sequence included in the transmission signal. The signal 12 is input to a transmission time calculator 15. The transmission time calculator 15 calculates, from the data length signal 12, the transmission time of each division of the transmission signal 11 acquired by the serial-parallel converter 14. Assuming that the number of data bits acquired from the data length signal 12 is represented by Nbit, the number of transmission bits per one symbol by Nbps, and the time necessary to transmit one symbol by Ts, the transmission time TM of the transmission signal 11 divided into M divisions is given by

$$T_M = T_{add}(M) + T_s \times Ceil(N_{bit}/(N_{bps} \times M)) \qquad (2)$$

where Tadd(M) represents the total time of the added second signal field Signal and the long preamble sequences LP2 and LP3 shown in FIG. 3, included in the transmission signal divided into M divisions, and Ceil() represents a function for acquiring the minimum integer higher than the argument. Since M = 3 in FIG. 3, Tadd(M) is Tadd(3).

The transmission time calculator 15 executes the equation (2) on M divisions (M: 1, 2, 3), thereby determining M that minimizes the required transmission time, and supplying the serial-parallel converter 14 with a division-number control signal 16 corresponding to the determined M. The division-number control signal 16 controls the number of divisions in the serial-parallel converter 14, i.e., the number of coded data signals (division signals) acquired from the converter 14 by serial-to-parallel conversion.

Coded data signals (division signals) output from the serial-parallel converter 14 are subjected to digital modulation in modulators 17A to 17C. The modulators 17A to 17C employ a modulation scheme such as binary phase shift keying (BPSK), quadrature phase shift keying (QPSK), 16 quadrature amplitude modulation (QAM), or 64QAM.

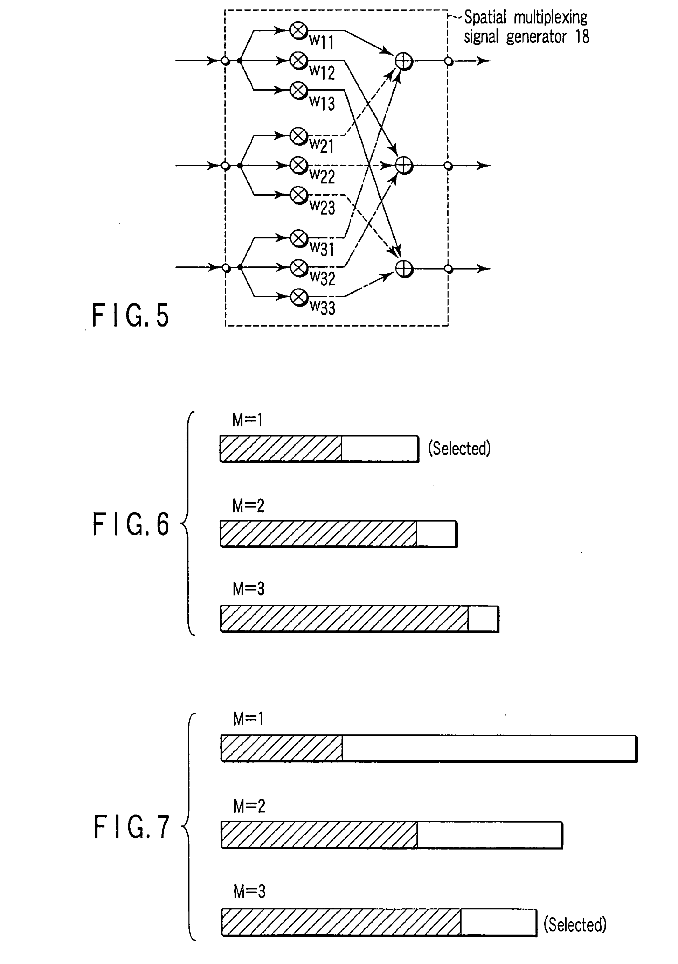

Digital modulation signals output from the modulators 17A to 17C are input to a spatial multiplexing signal generator 18, which generates transmission signals (hereinafter referred to as "spatial multiplexing signals") suitable for transmission by spatial multiplexing. The spatial multiplexing signal generator 18 adds weights to the digital modulation signals from the modulators 17A to 17C as shown in FIG. 5.

For instance, the generator 18 performs weighting on a digital modulation signal from the modulator 17A, using weighting factors or coefficients w11, w12 and w13, on a digital modulation signal from the modulator 17B, using weighting coefficients w21, w22 and w23, and on a digital modulation signal from the modulator 17C, using weighting coefficients w31, w32 and w33. Subsequently, the three signals subjected to weighting using w11, w21 and w31 are added together into a first spatial multiplexing signal. Similarly, the three signals subjected to weighting using w12, w22 and w32 are added together into a second spatial multiplexing signal, and the three signals subjected to weighting using w13, w23 and w33 are added together into a third spatial multiplexing signal.

The weighting coefficients w11, w12, w13, w21, w22, w23, w31, w32 and w33 can be arbitrary changed. If the weighting coefficients are set to appropriate values, increases in gain due to the formation of directional beams during transmission can be expected, resulting in an increase in the power received by the receiving terminal and hence in an increase in received signal quality. For weighting, either a digital or analog signal may be used.

The three spatial multiplexing signals generated by the spatial multiplexing signal generator 18 are individually input to the transmitters 19A to 19C and transmitted from the transmission antennas 20A to 20C. The transmitters 19A to 19C may be general ones that each comprise, for example, a D/A converter, filter, power amplifier, etc., and therefore will not be described in detail. The combination of each transmitter 19A to 19C and each transmission antenna 20A to 20C will hereinafter be referred to as "the transmission unit".

The radio communication apparatus shown in FIG. 4 can select the number of divisions from M = 1, M = 2 and M = 3. FIGS. 6 - 8 are conceptual views useful in explaining how the transmission time calculator 15 selects the number of divisions. In FIGS. 6 - 8, the hatched portion indicates a header signal length, while the blank portion indicates a data signal length.

In the case of, for example, FIG. 3, the header signal length corresponds to the length ranging from the short preamble sequence SP to the last long preamble sequence LP3, while the data signal length corresponds to the length of the data signals Data. In all the cases shown in FIGS. 6 to 8, the greater the number M of divisions (hereinafter referred to as "the division number M"), the longer the header signal length.

In all the cases shown in FIGS. 6 to 8, the division number M that minimizes the total of the header signal length and data signal length is basically selected from three division numbers 1, 2 and 3. For example, when the data signal length is relatively short as shown in FIG. 6, M = 1 is selected. If the data signal length is relatively long as shown in FIG. 7, M = 3, for instance, is selected. In other words, since in general, the shorter the data signal length, the longer overhead for transmitting the header signal, the overhead is reduced by reducing the number of divisions. As a result, reduction of throughput can be avoided.

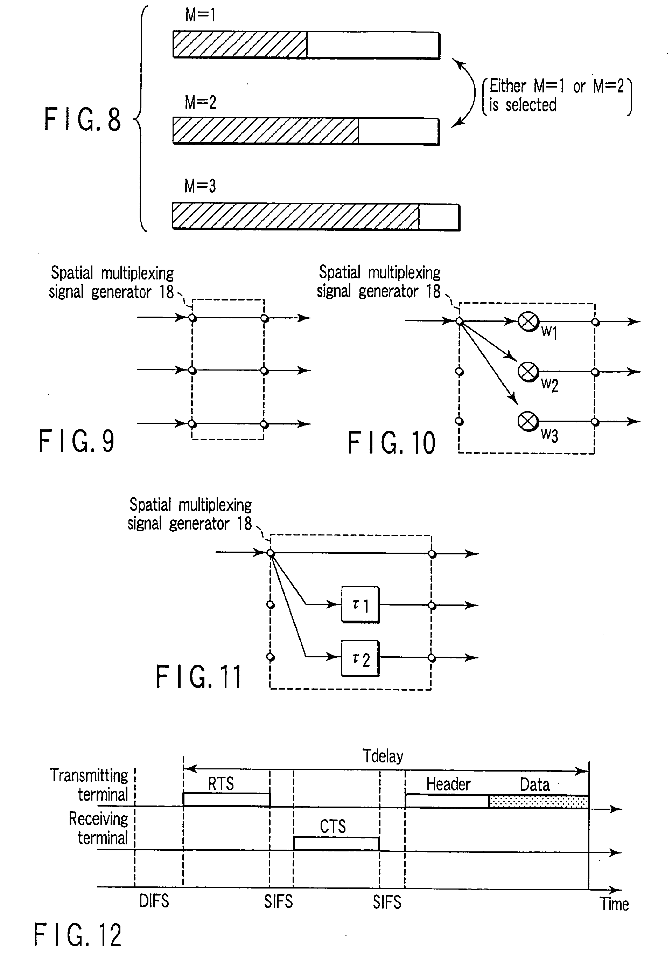

On the other hand, there is a case where two division numbers M exist (i.e., M = 1 and M = 2) which minimize the total of the header signal length and data signal length as shown in FIG. 8. In this case, either M = 1 or M = 2 may be selected. However, the selection of M = 1, where only one transmitter is used, is more advantageous to save power than in the case of M = 2 where two transmitters are used.

The division number M can be changed by controlling the serial-parallel converter 14. FIG. 4 schematically shows the serial-parallel converter 14. As shown, the converter 14 comprises three switches having their respective input terminals commonly connected to the output terminal of the encoder 13. The ON/OFF of these switches is controlled by the division-number control signal 16 from the transmission time calculator 15. For instance, when M = 3, the three switches are all kept in the ON state. When M = 1 or 2, one or two switches are kept in the ON state.

The weighting coefficients w11, w12, w13, w21, w22, w23, w31, w32 and w33 utilized by the spatial multiplexing signal generator 18 shown in FIG. 5 are appropriately controlled in accordance with the division number M and/or other conditions. When, for example, M = 3, the spatial multiplexing signal generator 18 passes three input signals therethrough as shown in FIG. 9. When M = 1 or 2, the spatial multiplexing signal generator 18 passes one or two input signals therethrough, and blocks the other signals or signal.

The various states of the spatial multiplexing signal generator 18 can be realized by changing the weighting coefficients w11, w12, w13, w21, w22, w23, w31, w32 and w33. For example, if w11, w22 and w33 are set to 1, and w12, w13, w21, w23, w31 and w32 are set to 0, the state shown in FIG. 9 can be realized. Thus, the spatial multiplexing signal generator 18 is a highly versatile circuit that can realize various operation states simply by changing w11, w12, w13, w21, w22, w23, w31, w32 and w33.

(Second Embodiment)

Referring to FIGS. 10 and 11, a second embodiment of the invention will be described. The second embodiment is similar to the first embodiment in that the transmission time required for transmitting each set of divisions into which a transmission signal is divided is calculated from its data length, and a certain number of signal divisions that require the minimum transmission time are transmitted. However, the second embodiment differs from the first embodiment in that in the former, the number of transmitters is larger than the number of divisions acquired from the serial-parallel converter 14. A description will be given of a case where division number 1 at which the number of known signals for channel response estimation is minimum is selected since the data length is short. In this case, in the first embodiment, transmission is performed using a single transmitter, whereas in the second embodiment, transmission is performed using a plurality of transmitters.

To perform transmission using the same header signal length, the same MCS and a plurality of transmitters, the spatial multiplexing signal generator 18 shown in FIG. 4 is configured to generate a plurality of output signals based on a single signal input thereto from the serial-parallel converter 14 as shown in, for example, FIG. 10. More specifically, the generator 18 generates a plurality of output signals by multiplying, by different weighting coefficients w1, w2 and w3, a single signal input thereto from the serial-parallel converter 14 via one of the modulators 17A to 17C. The signals thus generated by the spatial multiplexing signal generator 18 are transmitted from the respective transmitters 19A to 19C.

If the weighting coefficients w1, w2 and w3 are set appropriately, the spatial multiplexing signal generator 18 serves as a beam former and forms directional beams. As a result, a high gain is acquired during transmission to thereby increase the power received by the receiving terminal. On the other hand, the receiving terminal receives only a single data signal, therefore can perform timing synchronization, frequency synchronization, AGC, etc., needed when receiving a transmission signal, using the same header signal as in the case of performing transmission by a single transmitter.

The spatial multiplexing signal generator 18 may be configured to generate a plurality of output signals with time differences by delaying, by different delay times $\tau1$ and $\tau2$, a single signal input thereto from the serial-parallel converter 14 via one of the modulators 17A to 17C. In this case, if the delay times $\tau1$ and $\tau2$ are set appropriately, directional beams can be formed.

Further, when performing transmission using orthogonal frequency division multiplexing (OFDM) according to IEEE 802.11a, if the delay time difference between signals fall within a guard interval, these signals do not interface with each other. Furthermore, when encoding is performed to influence a plurality of subcarriers as in a convolution code, the spatial multiplexing signal generator 18 as shown in FIG. 1 provides the effect of transmission diversity and can enhance the received signal quality.

The second embodiment is directed to the case where M = 1, and transmission is performed using a plurality of transmitters without lengthening the header signal length. However, even when M is 2 or more, if the same processing as shown in FIG. 10 or 11 is performed on two or more signals supplied from the serial-parallel converter 14 via two or more of the modulators 17A to 17C, directional beams can be formed, and/or the effect of transmission diversity can be acquired.

As described above, in the second embodiment, a signal of a relatively short data length can be transmitted using a plurality of transmitters and using the same header signal length as in the case where the number of divisions is small. As a result, directional beams can be formed and/or the effect of transmission diversity can be acquired without increasing communication overhead, thereby enhancing the communication quality.

(Third Embodiment)

Referring to FIG. 12, a third embodiment of the invention will be described. The third embodiment is similar to the first or second embodiment in that the transmission time required for transmitting each set of divisions into which a transmission signal is divided is calculated from its data length, and a certain number of signal divisions that require the minimum transmission time are transmitted. However, in the third embodiment, the transmission time calculator 15 employs another calculation method.

In a scheme, according to IEEE 802.11, for realizing multiple access utilizing carrier sense multiple access with collision avoidance (CSMA/CA), unless a transmission signal is received by a desired receiving terminal and other receiving terminals, it is possible that these other receiving terminals may well start transmission of packets, and therefore the packets may collide with each other. As a mechanism for avoiding this, the technique of request-to-send/clear-to-send (RTS/CTS) is known.

In RTS/CTS, a transmitting terminal transmits a transmission request frame (RTS) to a receiving terminal as shown in FIG. 12. If reception of RTS has succeeded, the receiving terminal transmits a frame (CTS) for informing the transmitting terminal that reception preparation has completed. Upon receiving CTS, the transmitting terminal transmits an information packet after a short inter frame space (SIFS) elapses. As a result, the terminals do not perform transmission, which exist not only in the area where a transmission signal from the transmitting terminal is receivable, but also in the area where a CTS signal transmitted by the receiving terminal is receivable. This reduces collisions of packets.

RTS/CTS described above is applicable to a system in which a plurality of transmitters are used for transmitting a signal. Consideration will now be given to a case where a terminal having only a single receiver exists in the same area as a terminal for performing transmission using a plurality of transmitters. In this case, the terminal having only a single receiver cannot receive communication data from the terminal that performs communication using a plurality of transmitters, therefore may well determine transmittable and start transmission to thereby interrupt communication.

To avoid this when performing transmission using a plurality of transmitters, if one of the transmitters performs RTS/CTS, a message that communication will now be started can be sent to other terminals having only a single receiver. After that, communication is performed using the transmitters. Thus, interruption of communication by a terminal having a single receiver can be avoided.

When data is transmitted after such frame exchange, the RTS/CTS signal itself is included in overhead, as well as the header signal of a packet. In light of this, in the third embodiment, the transmission time calculator 15 calculates a transmission time that includes the time required for RTS/CTS and for SIFS. Thereafter, in the same manner as in the first or second embodiment, a certain number of signal divisions that require the minimum transmission time calculated by the transmission time calculator 15 are transmitted.

Although the third embodiment employs RTS/CTS, the invention is not limited to this. For instance, CTS-self wherein a transmitting terminal transmits only a CTS signal may be employed instead. In short, it is sufficient if the transmission time calculated includes the time required for transmitting and receiving a control signal.

As described above, in the third embodiment, the transmission time including the time required for a control signal, such as an RTS/CTS signal, transmitted before a data signal, is calculated. As a result, the transmission times required for the completion of transmission of the respective numbers of signal divisions can be compared with each other.

(Fourth Embodiment)

A fourth embodiment of the invention will be described. The fourth embodiment is similar to the first to third embodiments in that a transmitting terminal has a plurality of transmitters, and a receiving terminal has a plurality of receivers. However, in the fourth embodiment, the transmission signal generator 10 supplies a data discrimination unit 22 with a data type signal 21 indicating the data type of the transmission signal 11, as shown in FIG. 10.

The data discrimination unit 22 discriminates the data type of the transmission signal 11 from the data type signal 21. If the data type is a preset particular one, the serial-parallel converter 14 is controlled by a division-number control signal 23 so that it divides a transmission signal into a certain number of divisions that minimize the header signal length. The division-number control signal 23 controls the number of divisions in the serial-parallel converter 14 (i.e., the number of coded data items arranged in parallel).

In wireless LANs, in general, a receiving terminal transmits an ACK (Acknowledgement) signal after it has successfully received a packet. The ACK signal is of a predetermined size, and contains a small amount of information. Accordingly, in the fourth embodiment, for a frame such as an ACK signal, transmission corresponding to a division number (division number 1) that minimizes the header signal length is performed, which enables the calculation of the transmission times and comparison therebetween to be omitted unlike the first to third embodiments. As a result, even if the division number that minimizes the transmission time is not selected, reduction in throughput can be suppressed since the size of the transmission frame is small.

In the fourth embodiment, data of the particular type discriminated by the data discrimination unit 21 is ACK data. However, a control signal, such as an RTS or CTS signal, is also a packet signal of a small size, therefore can also be set as a data signal of a particular type. Further, the particular type data is not limited to ACK, RTS or CTS data, but may be, for example, a control frame or management frame included in IEEE 802.11 MAC frames, or a null function defined as a sub-type of a data frame.

As described above, in the fourth embodiment, concerning a transmission signal including a data signal of a type that is beforehand known to have a short data length, transmission corresponding to a division number that minimizes overhead can be performed without calculating any transmission time.

(Fifth Embodiment)

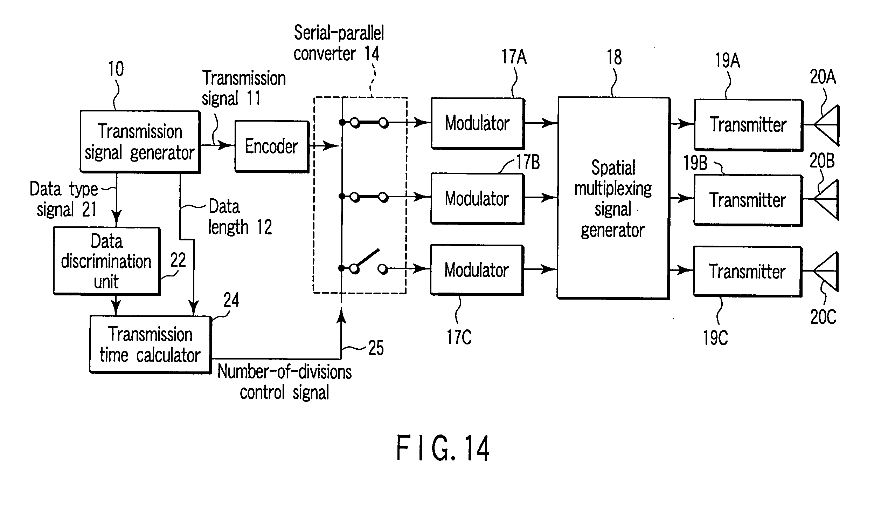

A fifth embodiment of the invention will be described. The fifth embodiment is a combination of each of the first to third embodiments and the fourth embodiment. Specifically, the fifth embodiment employs a data discrimination unit 22 and transmission time calculator 24 as shown in FIG. 14.

The data discrimination unit 22 discriminates the data type of the transmission signal 11 from the data type signal 21. If the data type is a preset particular one, the serial-parallel converter 14 is controlled by the division-number control signal 23 so that it divides a transmission signal into a certain number of divisions that minimize the header signal length. In contrast, if the data type discriminated by the data discrimination unit 22 is not the particular one, the transmission time calculator 24 calculates a transmission time corresponding to each division number based on the data length signal 12, as in the first to third embodiments. The transmission time calculator 24 controls the serial-parallel converter 14 using the division-number control signal 23 so that the division number that minimizes the required transmission time can be acquired from the converter 14.

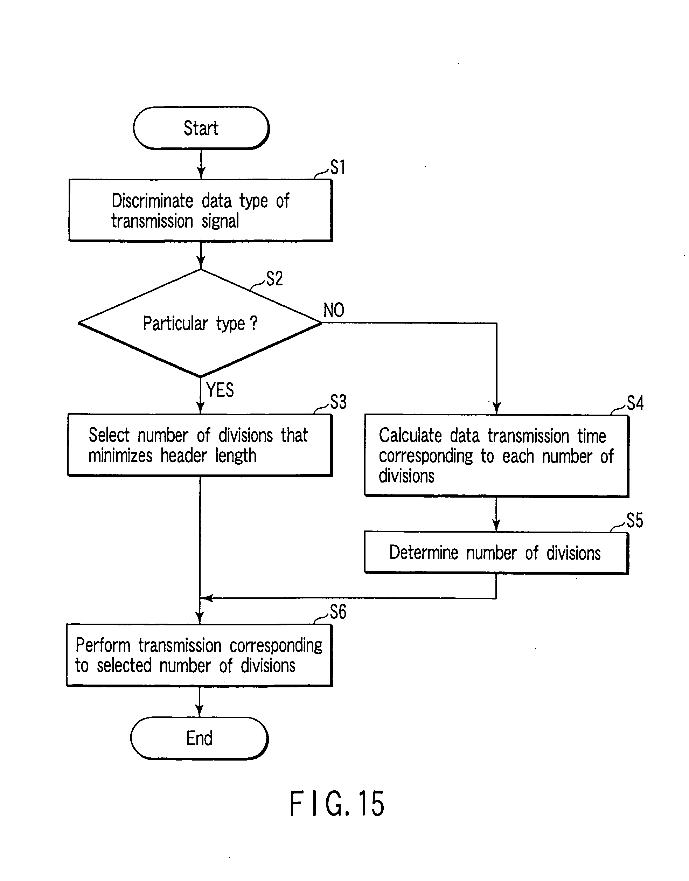

Referring to FIG. 15, the operation of the fifth embodiment will be described.

Firstly, as in the fourth embodiment, the data discrimination unit 22 determines from the data type signal 21 whether the data type of the transmission signal 11 is a preset particular one (steps S1 and S2). If it is determined that the data type is the particular one, the data discrimination unit 22 informs the transmission time calculator 24 that it is not necessary to calculate any transmission time, and instructs the calculator 24 to set a division number that minimizes the header signal length. In accordance with the division number that minimizes the header signal length, the serial-parallel converter 14 subjects the transmission signal 11 to serial-to-parallel conversion, i.e., divides the signal 11 into a set number of divisions.

In contrast, if the data type of the transmission signal 11 is not the particular one, the data discrimination unit 22 informs the transmission time calculator 24 of this. The transmission time calculator 24, in turn, calculates a transmission time corresponding to each division number, based on the data length signal 12, as in the first to third embodiments, thereby instructing the serial-parallel converter 14 to divide the transmission signal 11 into a certain number of divisions that minimize the time required for their transmission.

As described above, in the fifth embodiment, if the data type of a transmission signal is a particular one, the transmission signal is divided into a certain number of divisions that minimize the header signal length, without calculating any transmission time, and is transmitted. In contrast, if the data type is not the particular one, the transmission signal is divided into a given number of divisions that minimize the time required for their transmission, based on its data signal length, and is transmitted. As a result, a reduction in throughput due to the overhead of the header signal section of a transmission signal can be effectively avoided.

The present invention is not limited to the above-described embodiments, but may be modified in various ways without departing from the scope. Various inventions can be extracted from the embodiments by appropriately combining structural elements disclosed therein. For instance, some of the structural elements disclosed in the embodiments can be deleted. Further, structural elements disclosed in different embodiments may be appropriately combined by multiplexing.

**Claims**

1. A radio transmitting apparatus with a plurality of transmission units (19A to 19C, 20A to 20C), **characterized by** comprising:

   a calculation unit (15) configured to calculate, based on a data length of a transmission signal including a control signal and a data signal following the control signal, a transmission time required for transmitting the transmission signal and one or more transmission times corresponding to the number of one or more divisions of the transmission signal; and
   a signal generation unit (14, 17A to 17C, 18) configured to generate a signal supplied to at least one of the transmission units(19A to 19C, 20A to 20C), using the transmission signal corresponding to a minimum transmission time of the one or more transmission times or the divisions of the transmission signal which correspond to the minimum transmission time.

2. A radio transmitting apparatus with a plurality of transmission units (19A to 19C and 20A to 20C), comprising:

   a discrimination unit (21) configured to discriminate a data type of a transmission signal including a control signal and a data signal following the control signal;
   a signal generation unit (19A to 19C and 20A to 20C) configured to generate a signal supplied to at least one of the transmission units, using the transmission signal corresponding to the data type or one or more divisions of the transmission signal which correspond to the data type.

3. A radio transmitting apparatus with a plurality of transmission units, comprising:

   a discrimination unit configured to discriminate a data type of a transmission signal including a control signal and a data signal following the control signal;
   a calculation unit configured to calculate, based on a data length of a transmission signal including a control signal and the data signal following the control signal, a transmission time required for transmitting the transmission signal, one or more transmission times corresponding to the number of one or more divisions of the transmission signal; and
   a signal generation unit configured to generate a signal supplied to at least one of the transmission units, using the transmission signal corresponding to a minimum length of the control signal or the divisions of the transmission signal which correspond to the minimum length of the control signal when the data type is a particular one, the signal generation unit being configured to generate a signal, using the transmission signal corresponding to a minimum transmission time of the one or more transmission times or the divisions of the transmission signal which correspond to the minimum transmission time when the data type is not the particular one.

4. The radio transmitting apparatus according to claim 1, 2 or 3, **characterized in that** the control signal is a header signal including a known signal for estimating a channel response.

5. The radio transmitting apparatus according to claim 1, 2 or 3, **characterized in that** the control signal includes a header signal including a known signal for estimating a channel response, and a request to send/clear to send (RTS/CTS).

6. The radio transmitting apparatus according to claim 1, 2 or 3, **characterized in that**:

   the control signal includes a header signal including a known signal for estimating a channel response, and a request to send/clear to send (RTS/CTS); and

the calculation unit calculates the transmission time to include a time required to transmit the header signal and the RTS/CTS.

7.  The radio transmitting apparatus according to claim 1, 2 or 3, **characterized in that** the signal generation unit includes a serial-parallel converter (14) which performs serial-to-parallel conversion on the transmission signal to divide the transmission signal into the divisions.

8.  The radio transmitting apparatus according to claim 1, 2 or 3, **characterized in that** the signal generation unit generates the signals for transmission by performing weight addition on the divisions.

9.  The radio transmitting apparatus according to claim 1, 2 or 3, **characterized in that** the signal generation unit generates the signals for transmission by performing weighting on the transmission signal using different weighting coefficients.

10. The radio transmitting apparatus according to claim 1, 2 or 3, **characterized in that** the signal generation unit generates the signals for transmission by delaying the transmission signal by different delay times.

FIG. 1

FIG. 2

FIG. 3

FIG. 4

EP 1 578 063 A2

F I G. 5

Spatial multiplexing
signal generator 18

F I G. 6

M=1                        (Selected)

M=2

M=3

F I G. 7

M=1

M=2

M=3                        (Selected)

FIG. 8

M=1

$\left.\begin{array}{l}\text{Either M=1 or M=2}\\\text{is selected}\end{array}\right.$

M=2

M=3

Spatial multiplexing
signal generator 18

FIG. 9

Spatial multiplexing
signal generator 18

$w_1$
$w_2$
$w_3$

FIG. 10

Spatial multiplexing
signal generator 18

$\tau 1$
$\tau 2$

FIG. 11

Tdelay

Transmitting terminal

RTS

Header      Data

Receiving terminal

CTS

DIFS          SIFS          SIFS          Time

FIG. 12

Serial-parallel
converter 14

10

Transmission
signal 11

17A

18

19A

20A

Transmission
signal
generator

Encoder

Modulator

Transmitter

Spatial
multiplexing
signal
generator

17B

19B

20B

Data type
signal 21

Modulator

Transmitter

22

23

17C

19C

20C

Data
discrimination
unit

Modulator

Transmitter

Number-of-divisions control signal

F I G. 13

F I G. 14

Start

Discriminate data type of
transmission signal ~S1

Particular type ? ~S2

NO

YES

Select number of divisions that
minimizes header length ~S3

Calculate data transmission time
corresponding to each number of
divisions ~S4

Determine number of divisions ~S5

Perform transmission corresponding
to selected number of divisions ~S6

End

F I G. 15